Europäisches Patentamt

European Patent Office

Office européen des brevets

(19)

(11) Veröffentlichungsnummer: **0 391 296 B1**

(12) # EUROPÄISCHE PATENTSCHRIFT

(45) Veröffentlichungstag der Patentschrift: **16.03.94**

(21) Anmeldenummer: **90106259.6**

(22) Anmeldetag: **02.04.90**

(51) Int. Cl.⁵: $C08L\ 25/02$, //(C08L25/02, 101:00,33:10)

(54) **Thermoplastische Formmasse.**

(30) Priorität: **05.04.89 DE 3910942**

(43) Veröffentlichungstag der Anmeldung:
**10.10.90 Patentblatt 90/41**

(45) Bekanntmachung des Hinweises auf die
Patenterteilung:
**16.03.94 Patentblatt 94/11**

(84) Benannte Vertragsstaaten:
**BE DE ES FR GB IT NL**

(56) Entgegenhaltungen:
**EP-A- 0 218 229**
**EP-A- 0 268 040**

(73) Patentinhaber: **BASF Aktiengesellschaft**
**Carl-Bosch-Strasse 38**
**D-67063 Ludwigshafen(DE)**

(72) Erfinder: **Bueschl, Rainer, Dr.**
**Hollandstrasse 14**
**D-6701 Roedersheim-Gronau(DE)**
Erfinder: **Klaerner, Peter, Dr.**
**Hauptstrasse 62**
**D-6719 Battenberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Es gibt einen offensichtlichen Bedarf für neue thermoplastische Formmassen mit neuen Eigenschaftskombinationen. Die Entwicklung neuer Polymerer ist aufwendig und scheitert vor allem am Mangel an gut zugänglichen neuen Monomeren; Polymermischungen (Blends) haben daher große Bedeutung erlangt. Hierbei werden mindestens 2 Polymere unterschiedlicher chemischer Struktur durch Mischung (z.B. durch Extrusion) zusammengebracht in der Absicht ein Produkt zu erhalten, dessen Eigenschaften eine Kombination derer der Ausgangskomponenten darstellen oder diese gar durch synergistische Effekte übertreffen.

Bei Styrolpolymeren sind wichtige und kommerziell erfolgreiche Blends die von schlagfestem Polystyrol mit Polyphenylenether, oder die von ABS mit Polycarbonat.

Mischungen von Polystyrol (PS, gegebenenfalls schlagzähmodifiziert) mit Styrol/Acrylnitril-Copolymeren (SAN, gegebenenfalls schlagzähmodifiziert) sind bekannt, aber praktisch nicht verfügbar, obwohl sie günstige Eigenschaften der Bestandteile vereinen sollten: So bietet Polystyrol ein gutes Fließverhalten, dafür nur geringe Spannungsrißbeständigkeit gegenüber vielen Agentien, während umgekehrt bei ABS die Fließfähigkeit schlechter, dafür hohe Beständigkeit gegen Spannungsrißkorrosion vorhanden ist.

Ein Nachteil dieser Mischungen ist der Abfall der mechanischen Eigenschaften, hervorgerufen durch die Unverträglichkeit beider Matrices.

Im einzelnen sind hierzu die folgenden Druckschriften heranzuziehen:

DE 17 45 060 (GB 11 51 040, 11 99 559) (1)

JA 75-082159 (2)

JA 84-047446 (3)

BE 887 080 (GB 20 67 579) (4)

EP-A-0 268 040 (5)

EP-A-0 218 229 (6)

In (1) werden Mischungen von Polystyrol, das schlagfest modifiziert sein kann, mit Acrylnitril-Styrol-Butadien-Copolymeren (ABS) vorgeschlagen. (2) geht speziell auf mit Etylen-Propylen-Dien-Kautschuk (EPDM) modifiziertes Polystyrol ein.

In (3) wird eine spezielle Anwendung von Blends aus schlagfestem Polystyrol (HIPS) und ABS beschrieben, die wesentliche Anteile an anorganischen Zuschlagsstoffen enthalten und für die Herstellung von Golfbällen geeignet sein sollen. In allen Fällen bestehen jedoch Probleme mit den mechanischen Eigenschaften der erhaltenen Produkte, insbesondere der Zähigkeit, wie sich bei näherer Untersuchung dieser Vorschläge ergibt.

Zur Theorie der Verträglichkeit von solchen Polymermischungen ist auf (G.L Molau, Polymer Letters $\underline{3}$, 1007 - 1015 (1965); R. Casper, L. Morbitzer, Angew. Makromol. Chem. $\underline{58/59}$, 1 - 35 (1977) hinzuweisen, die angeben, daß es auf möglichst geringe Unterschiede beim Acrylnitrilgehalt der Stammpolymeren ankommt. (4) schlägt daher vor, acrylnitrilmodifiziertes HIPS mit reinem schlagfestem Polystyrol oder mit ABS abzumischen. Die acrylnitrilhaltigen HIPS-Typen haben jedoch den Nachteil, daß sie nicht in üblichen Produktionsanlagen für Polystyrol hergestellt werden können. Zudem gibt man hier den Vorteil auf, neue Formmassen alleine durch die Kombination eines bestehenden Sortiments von schlagfestem Polystyrol und Acrylnitril-Butadien-Styrol-Copolymeren (ABS) zu erhalten.

Aus (5) sind Mischungen aus Polystyrol und Polycyclohexyl(meth)acrylat bekannt; es ist jedoch angegeben, daß die gleichzeitige Anwesenheit von Acrylnitril als Comonomeren nicht empfohlen wird; andererseits sind nach (6) Mischungen von Polycarbonat, schlagzähem Polystyrol und u.a. Polycyclohexylacrylat bekannt; sie lösen aber nicht die Aufgabe, die darin besteht, schlagzäh modifiziertes Polystyrol mit ABS-Polymeren verträglich zu machen und so die mechanischen Eigenschaften der Mischungen zu verbessern.

Es wurde gefunden, daß man die mechanischen Eigenschaften von Blends aus schlagzähem Polystyrol (HIPS) und ABS- Polymeren erheblich verbessern kann, wenn man ihnen eine geringe Menge an (z.B. schon 1 - 5 Gew.-%) Cyclohexylmethacrylat (oder -acrylat) enthaltenden Homo- oder Copolymeren zusetzt. Schlagzähes Polystyrol und die Mischungspartner können aus den üblichen Sortimenten des Handels stammen. Dabei spielt es keine Rolle, ob der zur Schlagzähmodifizierung eingesetzte Kautschuk nach dem üblichen Lösungsverfahren oder durch Emulsionspolymerisation hergestellt wurde. Auch der Typ des Kautschuks (z.B. Polybutadien, EPDM, Butylkautschuk, Polybutylacrylat etc.) ist frei wählbar. Typische Produkte sind beschrieben in der Zeitschrift Kunststoffe $\underline{74}$, 538 ff (1984).

HIPS kann weitere Comonomere wie Acrylsäureester, Methacrylsäureester, Maleinimid, substituiertes Styrol (z.B. $\alpha$-Methylstyrol), ein copolymerisierbares Anhydrid (z.B. Maleinsäureanhydrid) in untergeordneter Menge enthalten.

Als ABS können Produkte eingesetzt werden, die bis zu 35 % Acrylnitril (AN) in der Matrix enthalten; bevorzugt sind solche mit bis zu 30 % AN, ganz besonders bevorzugt solche mit bis zu 25 % AN. Das Verhältnis von HIPS zu ABS kann über einen weiten Bereich gewählt werden, wobei diese Polymeren den wesentlichen Anteil bilden.

Die erfindungsgemäß dritte Komponente dieser Blends ist Polycyclohexylmethacrylat oder auch Polycyclohexylacrylat oder ein Copolymerisat von Cyclohexylmethacrylat oder Cyclohexylacrylat mit einem weiteren Monomerbaustein, bevorzugt einem Ester der Methacrylsäure, insbesondere Methylmethacrylat.

Obwohl es an sich möglich ist, einen wesentlichen Anteil der ternären Mischung aus dem im folgenden als Verträglichkeitsvermittler bezeichneten Cyclohexylacrylesterpolymeren aufzubauen (z.B. bis zu 50 Gew.-% und mehr), ist doch ein Anteil unter 30 Gew.-% bevorzugt und ein Anteil von etwa 1 bis 15 % durchaus ausreichend. Der - wenn gewünscht - Gehalt an Methylmethacrylat im Copolymerisat mit Cyclohexyl(meth)acrylat wird bestimmt durch den Grad der gewünschten, verträglichkeitsmachenden Wirkung. Der bestgeeignete Wert ist abhängig z. B. vom Gehalt des ABS an Acrylnitril.

Der Verträglichkeitsvermittler wird durch eine übliche Methode der Polymerisation, also radikalisch, anionisch oder durch Gruppentransferpolymerisation erhalten.

Zur Blendherstellung kann man alle gängigen Methoden anwenden, in der Regel wird man eine Schmelzemischung im Extruder durchführen.

Die Mischung kann zur weiteren Verbesserung der Eigenschaften z.B. mit Antioxidantien, UV-Stabilisatoren, Verarbeitungshilfsmitteln oder Flammschutzmitteln versehen werden.

Beispiele

Herstellung eines Cyclohexylmethacrylathomo- und copolymeren

In einem 40 l Metallkessel mit Ankerrührer werden 17 kg Monomeres bzw. Monomerenmischung zusammen mit 0,3 % tert. Dodecylmercaptan und 0,05 % Benzoylperioxid eingefüllt und bei ca. 80°C gerührt (200 Upm). Es stellt sich eine Umsatzgeschwindigkeit von ca. 15 %/h ein. Bei einem Feststoffgehalt von 40 - 50% werden 19 l Wasser mit 285 g eines handelsüblichen Schutzkolloids (Luviskol K 90) und 19 g Natriumphosphat zugegeben und die sich bildende Suspension zu Ende polymerisiert. Die Rührgeschwindigkeit beträgt hierbei 270 Upm., die Temperatur wird schrittweise erhöht von jeweils 3 Stunden bei 110°C auf 3 Stunden bei 130°C und schließlich auf 4 Stunden bei 140°C. Das perlförmige Polymerisat wird abgetrennt, gewaschen und anschließend bei 60°C i.V. getrocknet.

Der flüchtige Anteil eines solchen Produktes liegt bei ca. 2 %. Die erhaltenen Polymeren sind in Tabelle 1 aufgelistet.

Herstellung der Polymermischungen (Blends)

Die Mischungen wurden auf einem Extruder der Firma Werner & Pfleiderer, Typ ZSK 30 hergestellt. Als HIPS wurde handelsübliches schlagfestes Polystyrol 476 L der BASF AG eingesetzt, als handelsübliche ABS-Komponente DOW ABS 2020. Die Bestandteile wurden im Fluidmischer gemischt und über eine Bandwaage in den Extruder dosiert. Über eine weitere Bandwaage wurde der Verträglichkeitsvermittler zugeführt. Die Abmischung erfolgte bei 240°C und einem Durchsatz von 10 kg/h.

Prüfungen

1. Die Viskosität (VZ) wurde nach DIN 53726 in 0,5 %iger Lösung gemessen.
2. Die Lochkerbschlagzähigkeit ($a_{kl}$) wurde nach DIN 53753 in kJ/m$^2$ an gepreßten Stäben ermittelt.
3. Die Schaumhaftung wurde getestet durch Überschäumung von gepreßten Plättchen (Preßtemperatur 200°C) mit einem handelsüblichen Polyurethanschaum. Nach Aushärtung über Nacht wurden am nächsten Tag die Plättchen abgerissen. Blieben dabei wesentliche Reste des Schaumes am Plättchen haften, d.h. waren die Adhäsionskräfte größer als die Festigkeit des Schaumes in sich, so wurde die Schaumhaftung als gut bezeichnet. Blieben praktisch keine Rückstände am Preßplättchen, so wurde die Schaumhaftung als schlecht bezeichnet.
4. Beständigkeit gegen Halokohlenwasserstoffe:
Gepreßte Normkleinstäbe wurden für 60 sec. in Frigen R 11 gehalten und anschließend visuell geprüft, ob Blasen entstanden waren.

Diskussion der Beispiele

Tabelle 2 gibt eine Übersicht über die Zusammensetzung der untersuchten Proben. Zu Vergleichszwekken wurden 1 : 1 Mischungen der Polystyrolmarke 476 L (BASF) und DOW ABS 2020 ohne Zusatz oder mit 5, 10 bzw. 15 Gew.-% einer Mischung mit Polystyrol 168 N (BASF) und Luran 358 N (BASF) versetzt, um vergleichbare Bedingungen herzustellen und so den Einfluß von Cyclohexylestern auf die Mischungseigenschaften zu ermitteln. Man entnimmt Tabelle 3 sofort den Einfluß des erfindungsgemäßen Copolymeren auf die Lochkerbschlagzähigkeit: In fast allen Fällen ist sie, bezogen auf die Vergleichsversuche deutlich heraufgesetzt. Lediglich das Copolymere III zeigt diesen Effekt nicht, ganz offensichtlich eine Folge des hier bereits zu hohen MMA-Gehalts.

Die Untersuchung zeigt weiter, daß die Schaumhaftung durch ABS in allen Fällen deutlich heraufgesetzt wird im Vergleich zu Polystyrol 476 L. Ebenso wird die Frigenbeständigkeit in allen Fällen verbessert, d.h. solche Mischungen sind in jedem Falle sinnvoll.

Tabelle 1

| Copolymer | MMA Anteil in Gew.-% | CHMA* Anteil in Gew.-% | flüchtige Anteile in Gew.-% | VZ (CHCl$_3$) in ml/g |
|---|---|---|---|---|
| I | 25 | 75 | 1,9 | 124,2 |
| II | 50 | 50 | 2,6 | 119,8 |
| III | 75 | 25 | 2,1 | 118,1 |

* CHMA: Cyclohexylmethacrylat

Tabelle 2

| Versuch | 476 L[3] Anteile in Gew.-% | DOW ABS 2020[4] Anteile in Gew.-% | PS 168 N[1] Anteile in Gew.-% | Luran 358 N[2] Anteile in Gew.-% | Copolymer I (MMA/CHMA) 25/75 in Gew.-% | Copolymer II (MMA/CHMA) 50/50 in Gew.-% |
|---|---|---|---|---|---|---|
| Vergleich 1 | 50,0 | 50,0 | – | – | – | – |
| " 2 | 47,5 | 47,5 | 2,5 | 2,5 | – | – |
| " 3 | 45,0 | 45,0 | 5,0 | 5,0 | – | – |
| " 4 | 42,5 | 42,5 | 7,5 | 7,5 | – | – |
| " 5 | 100,0 | – | – | – | – | – |
| " 6 | – | 100,0 | – | – | – | – |
| Beispiel 1 | 45,0 | 45,0 | – | – | 10 | – |
| " 2 | 45,0 | 45,0 | – | – | – | 10 |
| " 3 | 47,5 . | 47,5 | – | – | – | 5 |
| " 4 | 42,5 | 42,5 | – | – | – | 15 |

1 Polystyrol-Formmasse der BASF AG, VZ (Toluol): 120 ml/g

2 Styrol/Acrylnitril-Formmasse der BASF AG, VZ (DMF): 80 ml/g

3 Schlagzäh modifiziertes Polystyrol der BASF AG

4 Schlagzäh modifiziertes Styrol/Acrylnitril Copolymer (ABS) der Dow Chemical Co.

EP 0 391 296 B1

Tabelle 3

| Beispiel | | $a_{kl}$ in kJ/m$^2$ | Schaumhaftung | Frigentest |
|---|---|---|---|---|
| Vergleich | 1 | 5,3 | gut | blasenfrei |
| " | 2 | 5,7 | gut | " |
| " | 3 | 5,8 | gut | " |
| " | 4 | 5,6 | gut | " |
| " | 5 | – | schlecht | Blasen |
| " | 6 | – | gut | blasenfrei |
| Beispiel | 1 | 8,3 | gut | " |
| " | 2 | 8,3 | gut | " |
| " | 3 | 8,8 | gut | " |
| " | 4 | 8,8 | gut | " |

**Patentansprüche**

1. Formmasse aus schlagzäh modifiziertem Polystyrol (HIPS) und einem ABS-Polymerisat als wesentlichen Bestandteilen, enthaltend als dritten oder weiteren Bestandteil ein Polymerisat oder Copolymerisat mit wenigstens 45 Gew.-% Einheiten von Cyclohexyl(meth)acrylat.

2. Formmasse nach Anspruch 1, enthaltend als Cyclohexyl(meth)acrylatcopolymerisat ein Copolymerisat mit Methylmethacrylat.

**Claims**

1. A molding material of high impact polystyrene (HIPS) and an ABS polymer as essential components, containing, as the third or further component, a polymer or copolymer containing not less than 45% by weight of units of cyclohexyl (meth)acrylate.

2. A molding material as claimed in claim 1, containing a copolymer with a methyl methacrylate as the cyclohexyl (meth)acrylate copolymer.

**Revendications**

1. Matière à mouler à base de polystyrène modifié de manière à le rendre résilient (HIPS) et d'un polymère d'ABS à titre de constituants essentiels, contenant, à titre de troisième constituant ou de constituant supplémentaire, un polymère ou un copolymère qui comporte au moins 45% en poids d'unités (méth)acrylate de cyclohexyle.

2. Matière à mouler suivant la revendication 1, contenant un copolymère avec le méthacrylate de méthyle à titre de copolymère de (méth)acrylate de cyclohexyle.